# EUROPEAN PATENT APPLICATION

(11) **EP 0 967 676 A1**
(43) Date of publication of application: **29.12.1999**
(21) Application number: 99305012.9
(22) Date of filing: 25.06.1999
(51) Int. Cl.: H01M 8/10, F02C 6/00, F01D 15/10, B64D 41/00

(54) **Jet engine with integral fuel cell**

(30) Priority: 25.06.1998 GB 9813757
(71) Applicant: Marconi Aerospace Limited, Fareham, Hants PO14 4QA (GB)
(72) Inventor: West, Chris, Marconi Aerospace Limited, Fareham, Hants PO14 4QA (GB); Wood, John, Marconi Aerospace Limited, Fareham, Hants PO14 4QA (GB)
(74) Representative: Camp, Ronald

(57) **Abstract**

A jet engine (2) has fuel cell tiles (33) integrated into its combustion chambers (20). A static invertor is used to convert the DC current output of the fuel cells into a conventional aircraft AC supply. The differential partial gas pressures required to power the fuel cells may be provided by oxygen-poor engine combustion products and atmospheric air from the engine compressor respectively.

A catalytic reformer which breaks down aviation fuel may provide oxygen-poor gas containing free hydrogen which accelerates the removal of oxygen molecules from the tile surface.

The tiles may be indirectly heated by temperature-regulated gas obtained by mixing combustion products with air from the compressor to control the electrical output power.

## Description

This invention relates to fuel cells, in particular, fuel cells used in conjunction with jet engines.

The current method of generation of electrical power for airborne applications is based on electro magnetic generators driven from the aircraft engine by means of a power off-take shaft and gear box.

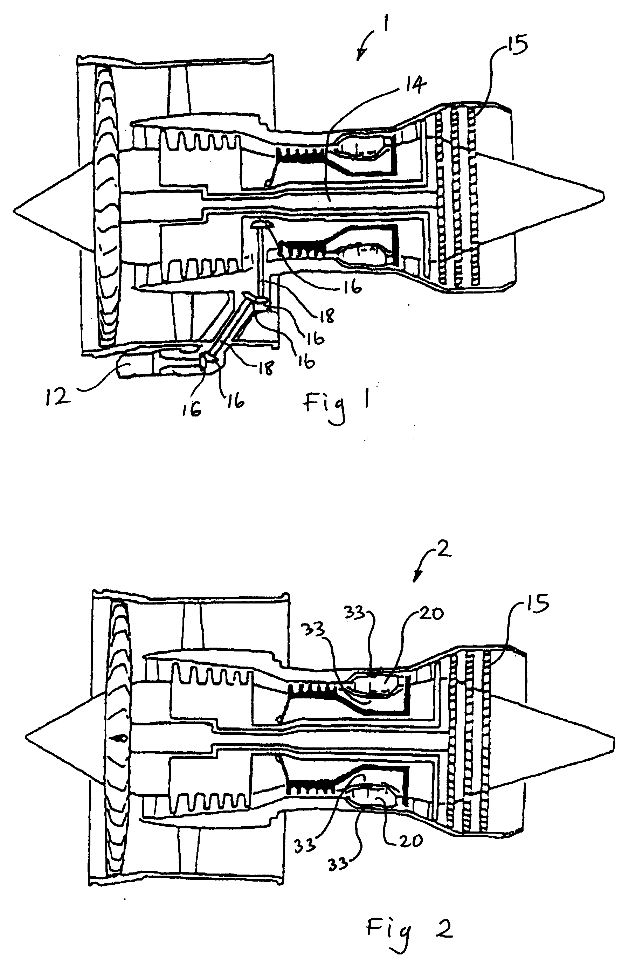

Such an arrangement is shown schematically in fig 1 in which a jet engine shown generally by 1 incorporates an electricity generator 12 which is mechanically driven from the turbine shaft 14 of the engine via gears 16 and line shafting 18, the turbine blades 15 being rotated by hot gases in the conventional way.

While such prior art arrangements are widely used, the mechanical power train requires a number of relatively expensive precision mechanical rotating components.

The present invention seeks to provide an improved way of obtaining electrical power from aircraft engines.

The present invention provides a jet engine including an integral fuel cell.

Embodiments of the invention will now be described, by way of non-limiting example only, with reference to the drawings in which:
Figure 1 shows a sectioned view of a prior art jet engine;
Figure 2 shows a sectioned view of a first embodiment of the invention;
Figure 3 shows a sectioned view of part of fig 2 on an enlarged scale;
Figure 4 shows a sectioned view of a modification of fig 3 illustrating a second embodiment of the invention; and
Figure 5 shows in schematic form a third embodiment of the invention.

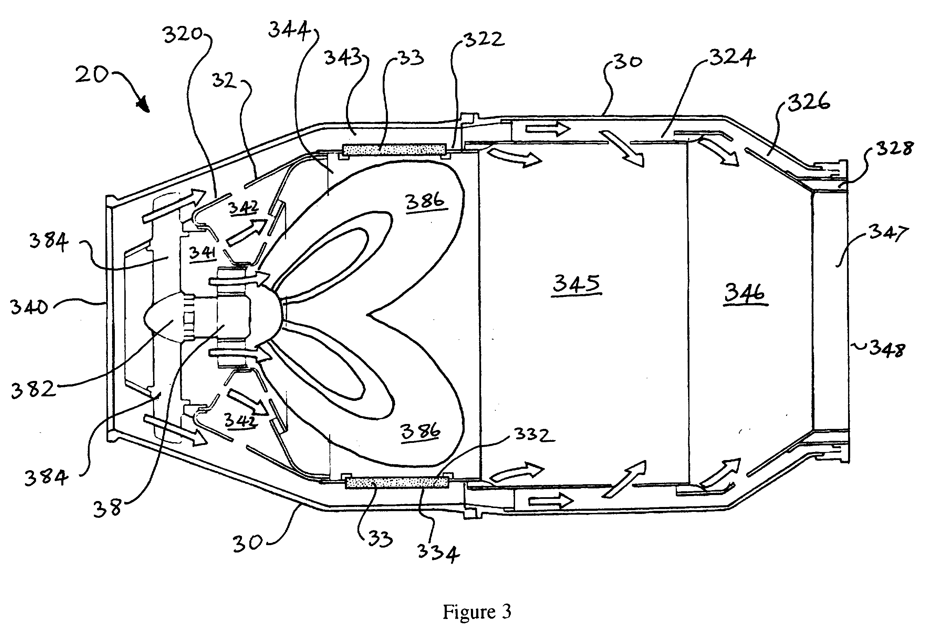

A first embodiment of the invention will now be described with reference to figures 2 and 3. As can be seen in fig 2, a jet engine 2 generates electricity, not by a rotating electrical generator, but by fuel cells 33 disposed within its combustion chambers 20. This completely eliminates moving parts from the electricity generation process and allows the components associated with electricity generation to be disposed within the housing of the engine.

Figure 3 shows a sectioned view of one of the combustion chambers 20. Each combustion chamber 20 consists of an outer housing 30 having an inner generally coaxial housing 32 consisting of an inlet portion 320 of generally frusto-conical form, a first combustion portion 322 in which combustion takes place, a second combustion portion 324 in which combustion products are mixed with air to cool and dilute same, and an outlet portion 326 of generally frusto-conical form leading to generally cylindrical outlet port 328. A combustion nozzle 38 is supported by struts 384 and is supplied with fuel by fuel lines which have been omitted for clarity. A number of fuel cell tiles 33 are arranged in the wall 322 of the combustion chamber.

Each tile consists of a solid electrolyte membrane having a first inward-facing surface 332 in contact with the combustion products of flames 386 produced by the burning of fuel supplied to the fuel jets 38, and a second outward-facing surface 334 in contact with air which flows through the annular space defined between the outer and inner housings 30, 32. The surfaces of the membranes are coated with a porous metallic conductor which in the present embodiment is platinum.

The hot gas in contact with the inner surface 332 has a lower concentration of oxygen than the air in contact with the outer surface 334. Ionic conduction of oxygen is driven by the difference in partial pressure of oxygen across the membrane. The metallic coatings provide the electrical connections for the output of the fuel cell. These connections have been omitted for clarity.

In this embodiment the membranes are placed at the position of the highest absolute pressure within the engine thermodynamic cycle. This maximises the difference in partial pressure of oxygen and hence maximises the power available from each membrane. Both the elevated temperatures necessary for the mobility of ions within the electrolyte and the partial pressure to drive the ions through the electrolyte are present at both high and low power settings of the engine.

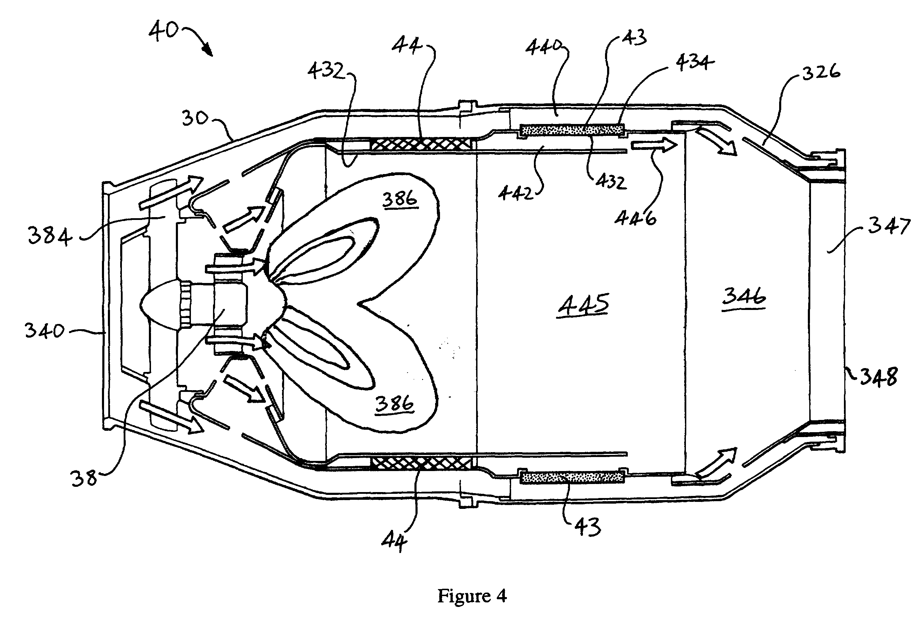

A second embodiment will now be described with reference to figure 4. Figure 4 shows a burner 40 which is a modification of fig 3 and which can be substituted for burners 20 of fig 2. Items which are identical in function with corresponding items of fig 3 have been given identical reference numerals.

This arrangement shown in fig 4 includes reformers 44 within the walls of the liner 432 of the combustion chamber. Each reformer 44 consists of a matrix of a catalyst and is fed with hydrocarbon aviation fuel by fuel ducts which have been omitted for clarity. The reformers 44 are maintained at an elevated temperature by the primary combustion flames 386. The high temperature causes the catalyst to decompose the fuel into a hydrogen-rich mixture of gases. This hydrogen-rich mixture passes into chamber 442 where it comes into contact with the respective inner surfaces 432 of fuel cell tiles 43 whose respective outer surfaces 434 are in contact with air in outer chamber 440.

Whereas in the previously-described embodiment, power is limited by the rate at which oxygen molecules can diffuse from the inner surface 332 of the membrane, in the present embodiment, oxygen is chemically removed from inner surface 432 by the hydrogen molecules of the hydrogen rich gas, the hydrogen molecules combining with oxygen to form water. Unused hydrogen and the other hydrocarbon products are burned where they enter the second chamber 445 at 446. The energy released by this secondary combustion is subsequently recovered in the main engine turbine 15.

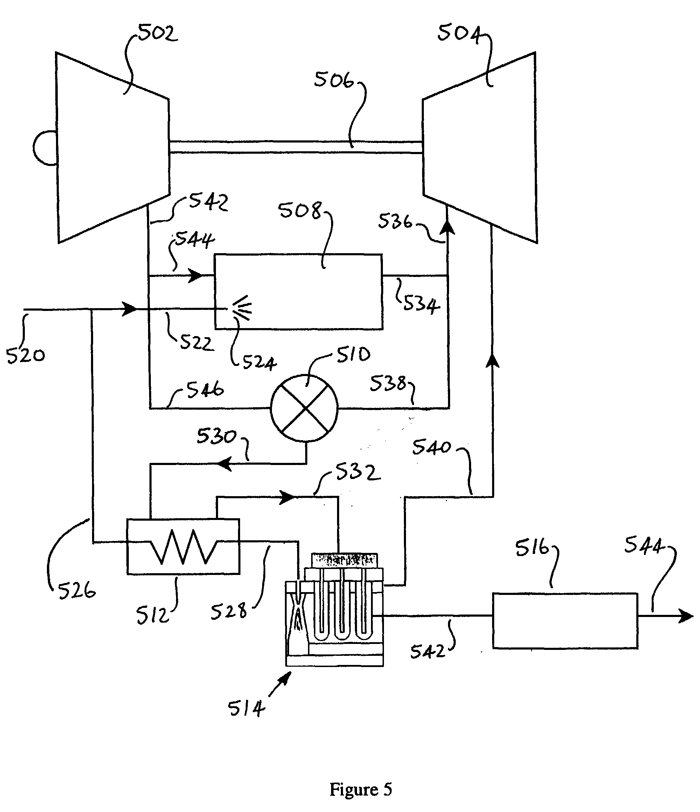

A third embodiment will now be described with reference to fig 5. In this embodiment a fuel cell and a reformer are located adjacent to, but externally of, the combustion chamber.

A compressor, shown schematically by 502, is driven by a turbine 504 via a shaft 506. Compressed air from the compressor 502 is fed via ducts 542 and 544 to a combustion chamber shown schematically as 508. Aviation hydrocarbon fuel from a fuel supply 520 is fed via duct 522 to a burner 524 within the combustion chamber. Exhaust gases from the combustion chamber pass via ducts 534, 536 to the turbine 504.

A proportion of the compressed air flows from duct 542 via duct 546 to a first input of a temperature control valve 510. Hot exhaust gas is supplied to a second input of valve 510 via ducts 534 and 538. Fuel pre-heater 512 is supplied with fuel from fuel source 520 via fuel line 526 and with hot gas at a controlled temperature via duct 530. The temperature-controlled gas flows via line 532 to a fuel cell shown schematically by 514. Fuel from the preheater flows into a reformer within the fuel cell package 514 to create a hydrogen-rich supply of gas for the fuel cell. The fuel cell utilises this supply of gas and the oxygen-carrying temperature-controlled air to generate electricity in the manner previously described in connection with the previous embodiments. Gas leaving the fuel cell package passes via duct 540 to turbine 504. The fuel cell and reformer are of conventional type and will not be described further.

Temperature control valve 510 adjusts the proportions of air from duct 546 and exhaust gas from duct 538 so as to deliver hot gas on duct 532 at the temperature required by the fuel cell. The fuel cell delivers DC output current on line 542 to a power conditioning circuit 526. Power is delivered therefrom to the aircraft's power supply via line 544. Power conditioning circuit 526 converts the DC output of the fuel cell into a form required by the aircraft. It may for example consist of a static invertor for generating a conventional 120V 400Hz AC supply. Adjusting the fuel cell gas temperature allows the power output of the fuel cell to be varied in accordance with varying electrical loads, as well as allowing the power output to remain constant when engine temperature varies due to varying engine loading.

The sensors and feedback-control paths associated with automatic temperature control have been omitted from the figure for clarity as such arrangements are well known to the skilled person.

## Claims

1. A jet engine including an integral fuel cell.

2. A jet engine as claimed in claim 1 in which the fuel cell is positioned at a combustion chamber of the engine.

3. A jet engine as claimed in claim 2 in which the fuel cell comprises a solid electrolyte membrane arranged to utilise oxygen partial pressure gradients between respective first and second faces of the membrane.

4. A jet engine as claimed in claim 3 comprising means to expose the said first face to a relatively oxygen-poor gas produced by the breaking-down of hydrocarbon fuel and means to expose the said second face to atmospheric air.

5. A jet engine as claimed in claim 4 comprising a turbine and a compressor for compressing atmospheric air, in which the means to expose the said second face to atmospheric air comprises conduit means arranged to direct air compressed by the compressor across said second face.

6. A jet engine as claimed in claim 5 in which the first face is arranged to be exposed to combustion products of fuel burnt in the combustion chamber, said relatively oxygen-poor gas consisting of the said combustion products.

7. A jet engine as claimed in claim 6 in which the first face comprises a portion of an inner wall of the combustion chamber which is directly exposed to the combustion chamber flame.

8. A jet engine as claimed in claim 5 further comprising a reformer for at least partially breaking down hydrocarbon fuel to produce a gas mixture containing hydrogen, said gas mixture comprising said relatively oxygen-free gas, and means to supply the reformer with heat generated by combustion of fuel within the engine.

9. A jet engine as claimed in claim 8 in which the reformer is arranged in a wall of the combustion chamber and the means to supply the reformer with heat comprises a heat conduction path through a wall of the combustion chamber arranged to convey heat directly from the combustion process to the reformer.

10. A jet engine as claimed in claim 8 in which the means to supply comprises means to adjust the temperature of heat supplied to the reformer.

11. A jet engine as claimed in claim 10 in which the means to adjust temperature comprises means to produce gas at a predetermined temperature, comprising means to mix hot products of the combustion process with relatively cool air from the compressor in variable proportions according to the temperature required.

12. A jet engine as claimed in claim 10, further comprising fuel pre-heater means for pre-heating the fuel supplied to the reformer, said fuel pre-heating means being heated by said gas at a predetermined temperature

13. A jet engine as claimed in claim 11 or 12 in which the means to adjust the temperature adjusts temperature according to the electrical power output demanded of the fuel cell.

14. A jet engine as claimed in any one of claims 11 to 13 in which the means to adjust temperature adjust the temperature in response to changes in combustion products temperature.
